# DEMANDE DE BREVET EUROPEEN

(11) **EP 1 703 754 A1**
(43) Date de publication de la demande: **20.09.2006**
(21) Numéro de dépôt: 06110554.0
(22) Date de dépôt: 01.03.2006
(51) Int. Cl.: H04Q 7/36, H04Q 7/34

(54) **Station de travail pour l'analyse et l'optimisation d'un réseau de télécommunication mobile cellulaire**

(30) Priorité: 17.03.2005 FR 0550688
(71) Demandeur: EVOLIUM SAS, 75008 Paris (FR)
(72) Inventeur: Houillier, Jean-Roch, 91240,Saint Michel sur Orge (FR); Brethereau, Alain, 78220 Viroflay (FR); De Mathan, Béatrix, 75016 Paris (FR)
(74) Mandataire: El Manouni, Josiane

(57) **Abrégé**

La station de travail (10) pour l'analyse et l'optimisation d'un réseau de télécommunication mobile cellulaire comporte un ensemble de cellules, chaque cellule étant caractérisée par au moins une relation d'adjacence avec au moins une cellule adjacente.

Elle comporte :
-une unité (14) de visualisation d'une carte présentant au moins deux cellules ;
-une interface (24) permettant à un opérateur de définir la relation d'adjacence entre deux cellules ; et
-des moyens d'analyse du fonctionnement du réseau en fonction des relations d'adjacence définies.

Ladite interface comporte des moyens (24) de sélection directe sur la carte d'au moins deux cellules et des moyens pour définir une relation d'adjacence entre les cellules sélectionnées.

## Description

La présente invention concerne une station de travail, pour l'analyse et l'optimisation d'un réseau de télécommunication mobile cellulaire comportant un ensemble de cellules, chaque cellule étant associée à une station de base propre à communiquer avec au moins une station mobile présente dans la cellule, chaque cellule étant caractérisée par au moins une relation d'adjacence avec au moins une cellule adjacente telle que les stations de base des deux cellules liées par une relation d'adjacence sont propres à permettre le basculement d'une communication d'une même station mobile entre les deux stations de base des deux cellules liées pour permettre le passage de la station mobile d'une cellule à l'autre sans interruption de la communication, la station de travail comportant :
- une unité de visualisation d'une carte présentant au moins deux cellules ;
- une interface permettant à un opérateur de définir la relation d'adjacence entre deux cellules ; et
- des moyens d'analyse du fonctionnement du réseau en fonction des relations d'adjacence définies.

Pour l'analyse et l'optimisation des réseaux de télécommunication mobile cellulaire, il est connu d'utiliser des stations de travail mettant en oeuvre un logiciel adapté pour permettre une modélisation du réseau et une analyse du comportement de celui-ci à partir d'informations résultant de mesures effectuées sur le terrain, des caractéristiques intrinsèques des éléments constituant le réseau et/ou de la morphologie du terrain sur lequel est implanté le réseau.

Comme connu en soi, dans un réseau cellulaire, chaque station mobile est en communication avec au moins une station de base, cette station définissant une cellule dans laquelle chaque station mobile présente est en communication avec la station de base.

Pour permettre le déplacement des stations mobiles sans interruption de la communication, il est connu de prévoir qu'une station mobile passant d'une cellule dans une cellule voisine ait sa communication basculée entre la station de base des cellules d'origine et de destination en fonction de critères géographiques, de la topologie du réseau ou de valeurs de paramètre du réseau. Cette procédure de basculement de communication entre deux stations de base est connue dans les normes, notamment de GSM ou de UMTS sous l'expression « handover ».

Lors de la configuration d'un réseau, ces possibilités de basculement sont configurées et deux cellules voisines, pour lesquelles il est possible de basculer la communication depuis une station mobile vers leurs stations de base sont caractérisées comme des cellules adjacentes. Une relation d'adjacence est ainsi définie entre celles-ci.

Pour deux cellules données, toute relation d'adjacence peut être matériellement impossible si il y a un trou de couverture entre les deux cellules, ou dans le cas où une relation d'adjacence est possible, celle-ci peut être prévue lors de la configuration, ou au contraire celle-ci peut être interdite afin d'éviter le basculement de la communication d'une cellule vers une autre.

Les stations de travail propres à l'analyse et l'optimisation d'un réseau de télécommunication mobile cellulaire prennent en compte ces relations d'adjacence pour fournir des résultats exploitables par l'utilisateur.

En particulier, elles comportent un module logiciel permettant à partir de la topologie du réseau, et des caractéristiques des différentes stations de base de déterminer des cellules adjacentes candidates pour chaque cellule, c'est-à-dire des cellules remplissant des critères voulus prédéterminés tels que la contiguïté, le recouvrement de couvertures des deux cellules, des valeurs de paramètres ou la topologie du réseau.

Par défaut, toutes les relations d'adjacence avec des cellules candidates sont établies afin de permettre une analyse du fonctionnement du réseau.

Lors de l'optimisation de la configuration du réseau, l'utilisateur travaillant sur la station de travail est amené à établir volontairement certaines relations d'adjacence entre cellules, à en modifier certaines ou encore à en supprimer d'autres.

Pour ce faire, il convient que l'utilisateur modifie certains paramètres dans une structure de données représentant la configuration du réseau. A cette fin, la station de travail met à disposition de l'utilisateur une succession de fenêtres de dialogue avec des champs à remplir permettant de programmer l'établissement, la suppression ou la modification d'une relation d'adjacence entre deux cellules.

Une telle station de travail est relativement complexe d'utilisation et est peu commode pour l'utilisateur, notamment lorsque celui-ci doit modifier fréquemment certaines relations d'adjacence lors de la phase d'optimisation du réseau.

L'invention a pour but de proposer une station de travail permettant d'établir plus simplement des relations d'adjacence entre cellules.

A cet effet, l'invention a pour objet une station de travail du type précité, caractérisée en ce que ladite interface comporte des moyens de sélection directe sur la carte d'au moins deux cellules et des moyens pour définir une relation d'adjacence entre les cellules sélectionnées.

Suivant des modes particuliers de réalisation, la station de travail comporte l'une ou plusieurs des caractéristiques suivantes :
- elle comporte des moyens de traitement propres à déterminer automatiquement des relations d'adjacence entre cellules pour l'optimisation du réseau à partir de caractéristiques connues du réseau ;
- elle comporte des moyens de mémorisation d'une structure de données comportant des paramètres définissant les relations d'adjacence entre cellules, et les moyens pour définir une relation d'adjacence entre les cellules sélectionnées comportent des moyens de modifications de paramètres définissant la relation d'adjacence dans ladite structure de données ;
- lesdits moyens pour définir une relation d'adjacence entre les cellules sélectionnées comportent une fenêtre de sélection affichée sur l'unité de visualisation et des moyens de sélection d'au moins un paramètre dans ladite fenêtre ;
- les moyens de sélection directe sur la carte d'au moins deux cellules comportent une souris et un pointeur mobile sur l'écran sous la commande de la souris ; et
- ladite interface est propre à la définition de relations d'adjacence candidates et la station comporte des moyens de validation de chaque relation d'adjacence candidate définie lors d'une phase ultérieure d'optimisation.

L'invention sera mieux comprise à la lecture de la description qui va suivre, donnée uniquement à titre d'exemple, et faite en se référant aux dessins annexés, sur lesquels :
- la Figure 1 est une vue en perspective schématique d'une station de travail selon l'invention ;
- la Figure 2 est une vue schématique d'un agrandissement d'une carte affichée sur la station de la Figure 1 ;
- la Figure 3 est un organigramme d'un algorithme de définition de relations d'adjacence entre cellules mis en oeuvre par la station de la Figure 1 ; et
- la Figure 4 est une vue identique à celle de la Figure 2, après établissement d'une relation d'adjacence entre deux cellules déterminées.

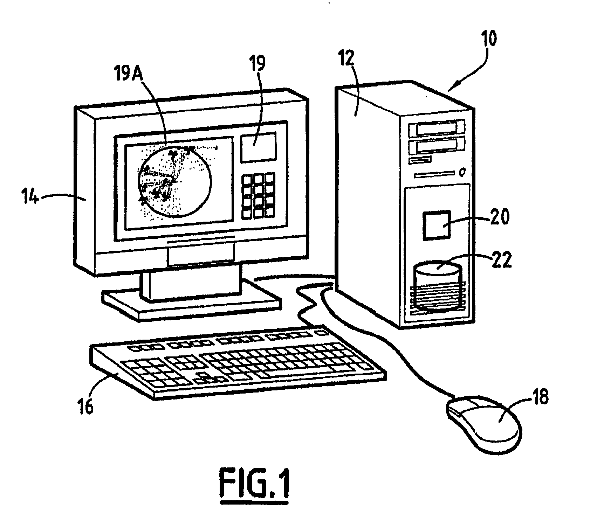

La station de travail 10 illustrée sur la Figure 1 est destinée à l'analyse du fonctionnement et à l'optimisation d'un réseau de télécommunication mobile cellulaire.

Comme connu en soi, cette station de travail met en oeuvre un logiciel adapté pour la visualisation d'une carte représentant le réseau de téléphonie mobile étudié.

Ainsi, la station comporte une unité centrale de traitement d'informations 12, un écran d'affichage 14 et des moyens formant une interface homme/machine tel qu'un clavier 16, et/ou une souris 18 permettant la sélection de fonctions à partir d'une interface graphique 19 affichée sur l'écran 14. Les interfaces sont propres en particulier à assurer la sélection d'éléments graphiques sur l'affichage.

L'unité de traitement d'informations 12 comporte un processeur 20 permettant la mise en oeuvre d'un programme d'ordinateur assurant le traitement de données et la commande de l'affichage sur l'écran 14 à partir notamment des informations reçues du clavier 16 et/ou de la souris 18.

En outre, l'unité 12 comporte des moyens de stockage de données 22, tel qu'un disque dur sur lesquels sont mémorisés une description d'une carte du réseau et le programme mis en oeuvre par la station de travail.

La description mémorisée d'une carte du réseau comporte notamment la position des stations de base implantées sur le territoire et propres à communiquer avec des stations mobiles, ainsi que les caractéristiques et paramètres de configuration de chaque station de base.

Comme connu en soi, une cellule est définie pour chaque station de base. Cette cellule correspond à la région depuis laquelle chaque station mobile est ou peut être en communication avec la station de base correspondante. Le contour de chaque cellule dépend de la configuration du réseau et notamment de la configuration des stations de base.

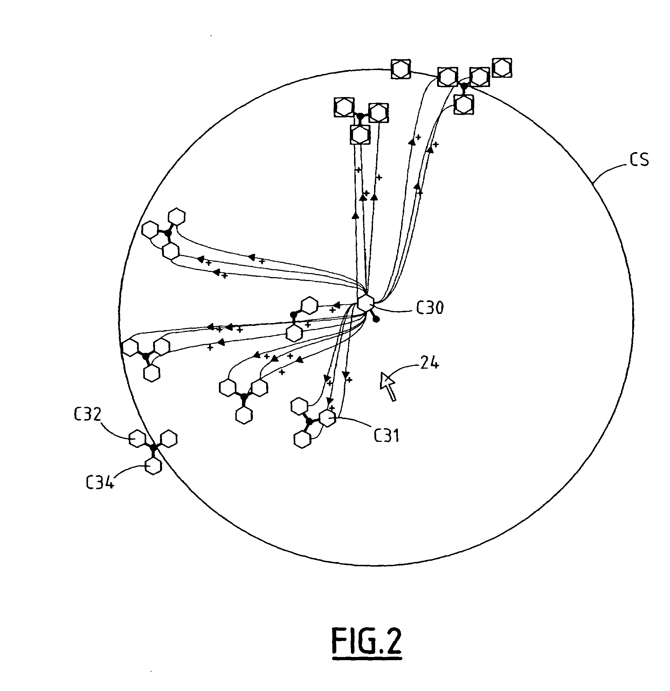

Pour des raisons de simplicité, et comme illustré sur la Figure 2, chaque cellule est représentée graphiquement sur l'écran 14 par une icône en forme d'hexagone. Les cellules ou les secteurs qui sont localisés sur la même station de base sont reliés à un même point noir par un segment rectiligne. Avantageusement, la station de travail est telle que les représentations de chaque cellule sont espacées sur la carte d'une distance proportionnelle à la distance séparant dans la réalité les cellules en cause.

Par ailleurs, les moyens de stockage de données 22 comportent une structure de données dans laquelle sont mémorisées des caractéristiques de chaque cellule et du réseau. Les caractéristiques du réseau comportent notamment les relations d'adjacence définies entre cellules.

Une relation d'adjacence entre deux cellules lorsqu'elle est définie prévoit la possibilité pour une station mobile de basculer sa communication entre les stations de base des deux cellules afin de permettre son passage d'une cellule à l'autre sans interruption de la communication.

Cette relation d'adjacence dépend de plusieurs paramètres, et notamment du type de commutation utilisée pour le passage d'une cellule à l'autre et du seuil d'interférence. Chaque relation d'adjacence peut être univoque ou biunivoque, c'est-à-dire n'autoriser le suivi de la communication d'une cellule vers l'autre que dans un sens ou dans les deux sens de déplacement de la station mobile.

Pour chaque station de base, et donc pour chaque cellule associée, les moyens de stockage de données 22 contiennent en outre une ou plusieurs variables caractéristiques du fonctionnement du réseau, chaque variable étant avantageusement connue à plusieurs instants successifs d'une même plage de temps, par exemple pour toutes les heures d'une journée.

Ces variables caractéristiques comportent par exemple des compteurs ou indicateurs de qualité de service, des paramètres logiques d'état et des paramètres de conception ou de design du réseau.

Les indicateurs de qualité de service comportent par exemple le pourcentage d'appels manqués, c'est-à-dire le nombre d'appels émis depuis une station de base ou théoriquement reçus par une station de base et qui n'ont pu être établis.

En outre, parmi les variables caractéristiques figure le nombre d'appels depuis ou vers une station mobile établi dans chaque cellule au travers de la station de base par unité de temps.

Ces variables caractéristiques sont obtenues à partir de mesures faites par les stations de base et/ou les stations mobiles à intervalles réguliers, ces variables caractéristiques étant transmises au travers du réseau jusqu'aux moyens 22 de stockage de données.

L'interface homme/machine de la station de travail 10 comporte des moyens pour la sélection directe sur la carte d'une cellule figurée à l'écran.

A cet effet, la station comporte des moyens pour déplacer un pointeur mobile 24 sur l'écran, à partir de la souris 18 et des moyens pour valider la sélection d'une cellule sur laquelle se trouve le pointeur mobile. Ces derniers sont formés par exemple d'un bouton de la souris.

Par ailleurs, la station de travail 10 comporte des moyens d'analyse du réseau propres à produire des histogrammes ou tout autre représentation structurée de variables caractéristiques du fonctionnement du réseau pour chacune des cellules du réseau, ces moyens d'analyse tenant compte des relations d'adjacence validées par l'utilisateur de la station lors des phases d'optimisation.

Les moyens d'affichage de la station sont tels que les relations d'adjacence sont représentées sur l'écran 14 par exemple à l'aide de courbes fléchées par exemple des splines fléchées telles qu'illustrées sur la Figure 2, chaque courbe fléchée étant orientée et dirigée d'une cellule de départ C30 vers une cellule de destination C31 entre lesquelles un basculement de communication entre la station mobile et la station de base des deux cellules peut être établie.

La couleur de la courbe fléchée est avantageusement représentative d'une caractéristique de la relation d'adjacence définie.

Comme connu en soi, la station de travail 10 comporte des moyens de définition automatique pour une cellule donnée des cellules candidates avec lesquelles une relation d'adjacence peut être théoriquement établie, compte tenu de la morphologie du terrain et des caractéristiques des stations de base implantées.

Compte tenu des distances limitées de transmission entre une station mobile et une station de base, pour une cellule donnée C30, les cellules candidates à une relation d'adjacence sont contenues à l'intérieur d'un cercle dit de sélection noté Cs sur la Figure 2. Les cellules en dehors de la zone délimitée par le cercle de sélection Cs sont considérées automatiquement comme n'étant pas candidates à l'établissement d'une relation d'adjacence.

Tel est le cas par exemple des cellules C32 et C34 pour la cellule C30.

Outre les moyens de définition automatique de relations d'adjacence candidates, la station de travail 10 comporte des moyens permettant à l'utilisateur de modifier des relations d'adjacence entre cellules manuellement.

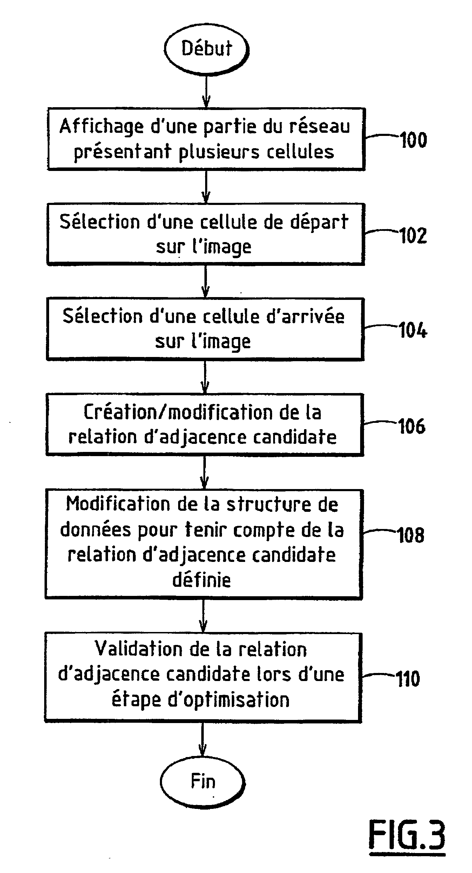

Ces moyens mettent en oeuvre l'algorithme de la Figure 3.

Initialement, à l'étape 100, une partie du réseau est affichée comme illustré sur la Figure 2.

A l'étape 102, l'utilisateur est invité à sélectionner une cellule dont la relation d'adjacence doit être modifiée. Pour ce faire, la station de travail scrute le déplacement du pointeur 24 sur l'écran, lequel pointeur est commandé par le déplacement de la souris par l'utilisateur. Lorsque le pointeur 24 est sur une cellule, et que l'utilisateur valide cette cellule, par exemple par appui sur un bouton de la souris, une cellule de départ, par exemple la cellule C30 est sélectionnée.

A l'étape 104 suivante, une cellule d'arrivée, par exemple la cellule C32 est sélectionnée de manière analogue par l'utilisateur grâce au déplacement du pointeur jusqu'à la cellule C32 et validation par appui sur le bouton de la souris.

A l'étape 106, l'utilisateur est invité à modifier la relation d'adjacence existant entre les cellules sélectionnées de départ et d'arrivée. Ainsi, une relation d'adjacence candidate peut être établie et les paramètres de cette relation d'adjacence définis, ou bien si une relation d'adjacence existait, les paramètres de celui-ci peuvent être modifiés ou la relation d'adjacence peut être supprimée.

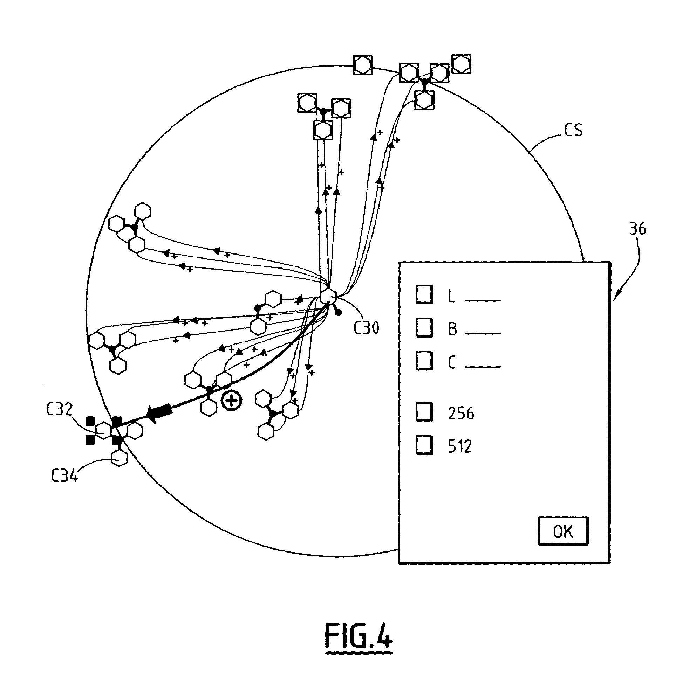

Cette modification de la relation d'adjacence s'effectue par exemple par sélection de certains paramètres dans une fenêtre 36 apparaissant sur l'écran à l'issue de la sélection de la cellule d'arrivée comme illustré sur la Figure 4.

Après validation par l'utilisateur de la modification de la relation d'adjacence, la station de travail modifie à l'étape 108 la structure de données pour mémoriser dans celles-ci les nouveaux paramètres caractéristiques de la relation d'adjacence candidate.

Ultérieurement, lors de la phase d'optimisation du réseau, la relation d'adjacence candidate mémorisée à l'étape 108 et définie par l'utilisateur aux étapes précédentes pourra ou non être validée par l'utilisateur à l'étape 110 afin d'être prise en compte dans l'analyse du réseau faite par la station de travail.

Ainsi, avec une telle station de travail, lors des phases d'optimisation, il est possible à l'utilisateur de modifier facilement les relations d'adjacence établies entre les différentes cellules en ayant recours aux moyens de sélection graphiques de deux cellules afin de modifier leur relation d'adjacence pour créer une relation d'adjacence candidate, laquelle relation d'adjacence candidate est ou non validée lors des phases d'optimisation proprement dites, ces relations d'adjacence modifiées étant prises en compte par la station de travail pour fournir des informations caractéristiques du fonctionnement du réseau.

Toute modification directe des paramètres de la structure de données étant supprimée, la création manuelle de relations d'adjacence candidates est simplifiée facilitant ainsi la manipulation de la station de travail et les conditions de l'optimisation du réseau pour l'utilisateur.

## Revendications

1. Station de travail (10) pour l'analyse et l'optimisation d'un réseau de télécommunication mobile cellulaire comportant un ensemble de cellules (C30, C31, C32, C34), chaque cellule étant associée à une station de base propre à communiquer avec au moins une station mobile présente dans la cellule, chaque cellule étant **caractérisée par** au moins une relation d'adjacence avec au moins une cellule adjacente telle que les stations de base des deux cellules liées par une relation d'adjacence sont propres à permettre le basculement d'une communication d'une même station mobile entre les deux stations de base des deux cellules liées pour permettre le passage de la station mobile d'une cellule à l'autre sans interruption de la communication, la station de travail comportant :
- une unité (14) de visualisation d'une carte présentant au moins deux cellules ;
- une interface (24) permettant à un opérateur de définir la relation d'adjacence entre deux cellules ; et
- des moyens d'analyse du fonctionnement du réseau en fonction des relations d'adjacence définies,
**caractérisée en ce que** ladite interface comporte des moyens (24) de sélection directe sur la carte d'au moins deux cellules et des moyens pour définir une relation d'adjacence entre les cellules sélectionnées.

2. Station de travail (10) selon la revendication 1, **caractérisée en ce qu'**elle comporte des moyens de traitement propres à déterminer automatiquement des relations d'adjacence entre cellules pour l'optimisation du réseau à partir de caractéristiques connues du réseau.

3. Station de travail (10) selon l'une quelconque des revendications précédentes, **caractérisée en ce qu'**elle comporte des moyens (22) de mémorisation d'une structure de données comportant des paramètres définissant les relations d'adjacence entre cellules, et **en ce que** les moyens pour définir une relation d'adjacence entre les cellules sélectionnées comportent des moyens de modifications de paramètres définissant la relation d'adjacence dans ladite structure de données.

4. Station de travail (10) selon l'une quelconque des revendications précédentes, **caractérisée en ce que** lesdits moyens pour définir une relation d'adjacence entre les cellules sélectionnées comportent une fenêtre de sélection (36) affichée sur l'unité de visualisation (24) et des moyens de sélection d'au moins un paramètre dans ladite fenêtre (36).

5. Station de travail (10) selon l'une quelconque des revendications précédentes, **caractérisée en ce que** les moyens de sélection directe sur la carte d'au moins deux cellules comportent une souris (18) et un pointeur (24) mobile sur l'écran sous la commande de la souris (18).

6. Station de travail (10) selon l'une quelconque des revendications, **caractérisée en ce que** ladite interface est propre à la définition de relations d'adjacence candidates et **en ce que** la station comporte des moyens de validation de chaque relation d'adjacence candidate définie lors d'une phase ultérieure d'optimisation.
